# FASCICULE DE BREVET EUROPEEN

(11) **EP 3 198 369 B1**
(45) Date de publication et mention de la délivrance du brevet: **04.09.2019**
(21) Numéro de dépôt: 15757317.1
(22) Date de dépôt: 31.07.2015
(51) Int. Cl.: H01H 25/06, G06F 3/01, G06F 3/0362, B60K 37/06, B60K 35/00, G05G 1/08, G05G 5/03

(54) **PROCÉDÉ ET INTERFACE DE COMMANDE À RETOUR HAPTIQUE POUR VÉHICULE AUTOMOBILE**
STEUERUNGSVERFAHREN UND -SCHNITTSTELLE ZUR HAPTISCHEN RÜCKMELDUNG FÜR EIN KRAFTFAHRZEUG
HAPTIC-FEEDBACK CONTROL METHOD AND INTERFACE FOR A MOTOR VEHICLE

(30) Priorité: 31.07.2014 FR 1401769
(43) Date de publication de la demande: 02.08.2017
(73) Titulaire: DAV, 94046 Créteil Cedex (FR)
(72) Inventeur: VANHELLE, Stéphane, F-94046 Créteil Cedex (FR)
(74) Mandataire: Delplanque, Arnaud
(86) Numéro de dépôt international: PCT/FR2015/052127
(87) Numéro de publication internationale: WO 2016/016588

(56) Documents cités:
- DE-A1-102004 041 690
- FR-A1- 2 955 404
- FR-A1- 2 955 813
- US-A1- 2002 057 152
- US-A1- 2009 189 747
- US-A1- 2011 304 648
- RUSSO R ET AL: "Design of an adaptive control for a magnetorheological fluid brake with model parameters depending on temperature and speed;Design of an adaptive control for a magnetorheological fluid brake with model parameters depending on temperature and speed", SMART MATERIALS AND STRUCTURES, IOP PUBLISHING LTD., BRISTOL, GB, vol. 20, no. 11, 3 octobre 2011 (2011-10-03), page 115003, XP020213443, ISSN: 0964-1726, DOI: 10.1088/0964-1726/20/11/115003

## Description

La présente invention concerne une interface de commande pour véhicule automobile permettant de transmettre un retour haptique à un utilisateur pour l'informer de la prise en compte d'une commande. L'invention concerne également un procédé de commande d'une interface de commande à retour haptique.

Le retour haptique, généré par exemple à l'utilisateur manipulant une molette, est généralement composé de forces de résistance de valeurs variables, créant des points durs et paliers, correspondant à différentes commandes pour les dispositifs pilotés via l'interface. Le retour haptique est avantageux en voiture car il ne nécessite que peu d'attention de la part du conducteur, en particulier, il ne nécessite pas que le conducteur détourne son regard de la route.

On connait des interfaces comportant un fluide magnéto-rhéologique capable de créer un effort de freinage à un élément mobile dans le fluide lorsqu'un champ magnétique est appliqué sur le fluide du fait que la viscosité du fluide magnéto-rhéologique change avec l'intensité du champ magnétique appliqué. Plus précisément, les fluides magnéto-rhéologiques sont composés de particules métalliques en suspension. Lorsqu'un champ magnétique est appliqué, les particules s'orientent selon les lignes de champ. L'alignement des particules selon les lignes de champ dans la zone soumise au champ modifie la viscosité du liquide. Les fluides magnéto-rhéologiques peuvent ainsi générer un effort de freinage sur l'élément mobile baignant dans le fluide magnéto-rhéologique selon l'intensité du champ magnétique appliqué.

Cependant, si la répartition des particules dans le fluide était inhomogène, par exemple si les particules en suspension dans le fluide s'accumulaient sur un côté de l'interface par gravité ou sédimentation, une conséquence directe pourrait être que les efforts de freinage générés ne soient pas rigoureusement reproductibles. Ce phénomène pourrait notamment s'accentuer sur des interfaces au design vertical ou après de longues périodes d'inutilisation. Egalement, d'importants écarts de température du fluide magnéto-rhéologique pourraient influer sur la viscosité du fluide magnéto-rhéologique et rendre les efforts de freinage inhomogènes.

Le document US 2009/0189747 A1 décrit un dispositif de commande pour un appareil électrique tel que de préférence un appareil électroménager, le dispositif de commande présentant au moins un élément de commande mobile permettant la commande par déplacement de l'élément de commande, l'élément de commande étant relié par force à un dispositif d'actionneur pour permettre une réaction haptique lors d'un mouvement de l'élément de commande en fonction de la commande ou du mouvement, caractérisé en ce que le dispositif de commande présente un capteur tactile ou de proximité et un circuit de commande pour basculer le dispositif d'actionneur du mode normal à un mode veille à faible consommation électrique, dans lequel le circuit de commande est conçu de manière à basculer en mode normal le dispositif d'actionneur se trouvant en mode veille à faible consommation électrique en cas de proximité ou de contact détecté de l'élément de commande, et à basculer le dispositif d'actionneur du mode normal au mode veille à faible consommation électrique ou à le laisser dans ce mode si aucun contact ou proximité de l'élément de commande n'est détecté.

Les documents FR 2 955 404 A1, US 2002/0057152 A1, DE 10 2004 041690 A1 et FR 2 955 813 A1 décrivent des interfaces de commande à retour haptique pour véhicule automobile comprenant des actionneurs à fluide magnéto-rhéologique. Afin de résoudre au moins en partie l'inconvénient susmentionné, la présente invention a pour objet une interface de commande à retour haptique pour véhicule automobile comportant un module de fluide magnéto-rhéologique comprenant un élément mobile, un fluide magnéto-rhéologique en contact avec l'élément mobile, une unité d'application d'un champ magnétique et au moins une bobine pour appliquer un champ magnétique au fluide magnéto-rhéologique, l'unité d'application d'un champ magnétique étant configurée pour modifier l'alimentation de la bobine afin de générer un retour haptique à l'utilisateur déplaçant l'élément mobile, caractérisée en ce qu'elle comporte une unité de réveil configurée pour détecter l'activation d'un paramètre de réinitialisation, l'unité de réveil étant reliée à l'unité d'application d'un champ magnétique pour appliquer un champ magnétique de réveil au fluide magnéto-rhéologique lorsque l'activation d'un paramètre de réinitialisation est détectée.

En appliquant un champ magnétique de réveil au fluide magnéto-rhéologique lorsqu'on détecte l'activation d'un paramètre de réinitialisation, on peut replacer les particules du fluide magnéto-rhéologique le long des lignes de champ du champ magnétique, de sorte que celles-ci puissent se positionner aussi rapidement après une période de non-utilisation qu'après une utilisation récente. Egalement, l'application d'un champ magnétique de réveil au fluide magnéto-rhéologique permet d'élever la température interne du module de fluide magnéto-rhéologique et ainsi de rétablir les conditions normales d'utilisation en température du fluide magnéto-rhéologique. On réduit ainsi les risques éventuels d'inhomogénéités des efforts de freinage générés par effet de sédimentation des particules ou par une température trop basse.

Selon un exemple de réalisation, l'unité de réveil est reliée à au moins un détecteur d'activation du paramètre de réinitialisation du véhicule automobile distinct d'un capteur de fonctionnement du module de fluide magnéto-rhéologique, tel qu'un capteur d'approche et/ou de contact de l'élément mobile et/ou d'un capteur de position de l'élément mobile et/ou un capteur d'effort de freinage de l'élément mobile.

La détection de l'activation d'un paramètre de réinitialisation n'est alors pas limitée aux informations liées au fonctionnement du module de fluide magnéto-rhéologique, mais peut provenir d'autres capteurs du véhicule automobile, tels que d'un capteur de température de l'habitacle et/ou d'un détecteur de mise sous tension d'un circuit d'alimentation électrique du véhicule automobile.

Selon un exemple de réalisation, l'interface de commande comporte un capteur d'approche et/ou de contact et/ou un capteur de position de l'élément mobile, relié à l'unité de réveil.

Selon un exemple de réalisation, l'unité de réveil est reliée à un capteur de température et/ou un détecteur de mise sous tension du circuit d'alimentation électrique du véhicule automobile.

Selon un exemple de réalisation, l'élément mobile est rotatif.

Selon un autre exemple de réalisation, l'élément mobile est mobile en translation.

L'invention a aussi pour objet un procédé de commande d'une interface de commande à retour haptique telle que décrite précédemment, caractérisé en ce qu'on alimente la bobine pour appliquer un champ magnétique de réveil au fluide magnéto-rhéologique lorsqu'on détecte qu'un paramètre de réinitialisation est activé.

Selon un exemple de réalisation, on détecte l'activation d'un paramètre de réinitialisation par au moins un détecteur d'activation d'un paramètre de réinitialisation distinct d'un capteur de fonctionnement du module de fluide magnéto-rhéologique.

Selon un exemple de réalisation, le paramètre de réinitialisation comprend la mise sous tension d'un circuit d'alimentation électrique du véhicule automobile. On détecte ainsi le souhait de l'utilisateur d'accéder aux principales fonctions du véhicule automobile.

Selon un exemple de réalisation, le paramètre de réinitialisation comprend la détection d'une température inférieure à un seuil de température. On constate en effet une augmentation de la viscosité du fluide magnéto-rhéologique à basse température. L'application d'un champ magnétique de réveil au fluide magnéto-rhéologique permet d'élever la température interne du module de fluide magnéto-rhéologique et ainsi de rétablir les conditions normales d'utilisation en température du fluide magnéto-rhéologique.

Selon un exemple de réalisation, le paramètre de réinitialisation comprend la détection de l'approche ou du contact de l'utilisateur de l'interface de commande. On détecte ainsi l'intention de l'utilisateur d'interagir avec l'interface de commande.

Selon un exemple de réalisation, on alimente la bobine pour appliquer un champ magnétique de réveil au fluide magnéto-rhéologique lorsqu'on détecte l'approche de l'utilisateur et on coupe l'application du champ magnétique de réveil au fluide magnéto-rhéologique lorsqu'on détecte le contact de l'interface de commande par l'utilisateur.

Selon un exemple de réalisation, on coupe l'application du champ magnétique de réveil au fluide magnéto-rhéologique lorsqu'on détecte l'approche ou le contact de l'interface de commande par l'utilisateur.

Selon un exemple de réalisation, on coupe l'application du champ magnétique de réveil au fluide magnéto-rhéologique après une durée prédéterminée.

Selon un exemple de réalisation, on coupe l'application du champ magnétique de réveil au fluide magnéto-rhéologique lorsqu'on détecte un déplacement de l'élément mobile.

D'autres caractéristiques et avantages de l'invention ressortiront de la description suivante, donnée à titre d'exemple et sans caractère limitatif, en regard des dessins annexés sur lesquels :
- la figure 1 représente une vue schématique d'un exemple de réalisation d'une interface de commande à retour haptique, et
- la figure 2 représente une vue schématique d'un autre exemple de réalisation d'une interface de commande.

Sur ces figures, les éléments identiques portent les mêmes numéros de référence.

L'interface de commande à retour haptique pour véhicule automobile est par exemple montée dans le tableau de bord ou dans une console centrale du véhicule, pour commander des systèmes embarqués du véhicule tels que le système de climatisation, de radio, du téléphone, de ventilation ou de navigation.

L'interface de commande 1 comporte un module de fluide magnéto-rhéologique 3 et une unité de réveil 18.

Le module de fluide magnéto-rhéologique 3 comporte un élément mobile 6, un fluide magnéto-rhéologique 7 en contact avec l'élément mobile 6, une unité d'application d'un champ magnétique 4 et au moins une bobine 8 pour appliquer un champ magnétique au fluide magnéto-rhéologique 7.

L'unité d'application d'un champ magnétique 4 est configurée pour alimenter la bobine 8 en courant et modifier l'alimentation afin de générer un retour haptique à l'utilisateur déplaçant l'élément mobile 6.

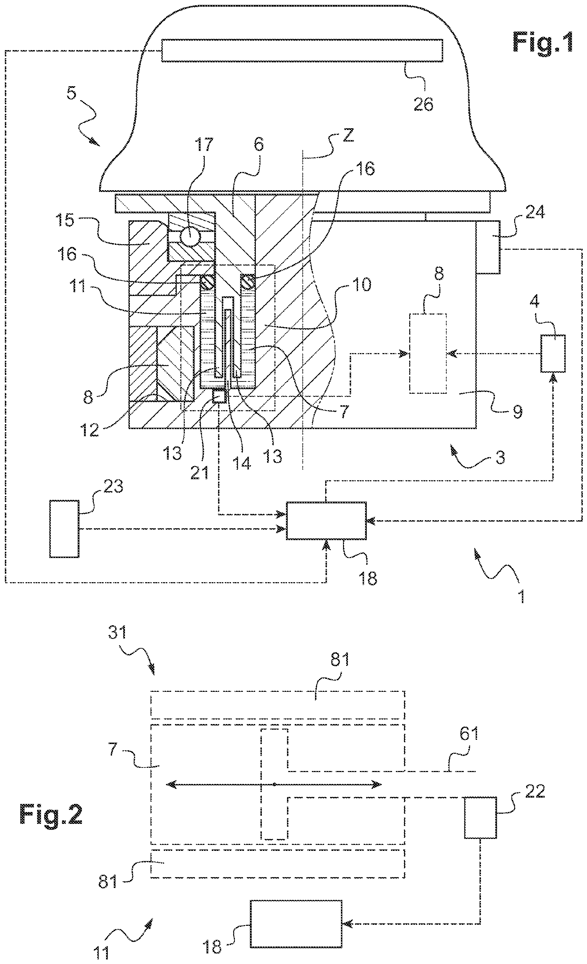

Le module de fluide magnéto-rhéologique 3 peut comporter un élément de préhension 5, solidaire de l'élément mobile 6, c'est-à-dire rigidement lié à l'élément mobile 6, visible sur le mode de réalisation de la figure 1. L'élément de préhension 5 est par exemple fait de matière avec l'élément mobile 6 ou clipsé sur l'élément mobile 6 ou fixé par goupille ou par tout autre moyen de fixation connu. Alternativement, l'élément de préhension 5 peut être couplé à l'élément mobile 6 via un système d'engrenages, chaînes, courroies ou tout autre moyen mécanique permettant d'assurer un couplage entre l'élément de préhension 5 et l'élément mobile 6.

Un retour haptique est généré à l'utilisateur qui déplace l'élément mobile 6, par exemple via l'élément de préhension 5, par modification du champ magnétique appliqué au fluide magnéto-rhéologique 7. On désigne par « haptique » un retour par le toucher, tel qu'une force de résistance variable.

En effet, le fluide magnéto-rhéologique 7 présente la propriété que sa viscosité varie sous l'effet d'un champ magnétique variable. Ainsi, la force de frottement induite par le fluide magnéto-rhéologique 7 est faible lorsqu'aucun champ magnétique n'est appliqué et devient de plus en plus importante lorsque l'intensité du champ magnétique augmente. Les fluides magnéto-rhéologiques peuvent ainsi être utilisés en tant que freins magnéto-rhéologique. Par exemple, l'application d'une intensité en forme de créneau permet de créer des points durs au niveau des points d'indexage pour lesquels l'intensité est importante.

Le champ magnétique créé par une bobine étant proportionnel au courant qui la traverse, on peut faire varier l'intensité du champ magnétique créé au centre de la bobine 8 en faisant varier l'alimentation de la bobine 8. La variation de l'intensité du champ magnétique appliqué au fluide magnéto-rhéologique 7, permet de faire varier la viscosité du fluide, et ainsi la force de frottement exercée par le fluide. On peut ainsi faire varier la force avec laquelle l'élément mobile 6 peut être déplacé pour générer un retour haptique spécifique à l'utilisateur manipulant l'élément mobile 6.

L'unité de réveil 18 est configurée pour détecter l'activation d'un paramètre de réinitialisation et pour appliquer un champ magnétique de réveil au fluide magnéto-rhéologique 7 lorsque l'activation d'un paramètre de réinitialisation est détectée.

En appliquant un champ magnétique de réveil au fluide magnéto-rhéologique 7 lorsqu'on détecte l'activation d'un paramètre de réinitialisation, on peut replacer les particules du fluide magnéto-rhéologique le long des lignes de champ du champ magnétique, de sorte que celles-ci puissent se positionner aussi rapidement après une période de non-utilisation qu'après une utilisation récente. Egalement, l'application d'un champ magnétique de réveil au fluide magnéto-rhéologique 7 permet d'élever la température interne du module de fluide magnéto-rhéologique 3 et ainsi de rétablir les conditions normales d'utilisation en température du fluide magnéto-rhéologique 7. On réduit ainsi les risques éventuels d'inhomogénéités des efforts de freinage générés par effet de sédimentation des particules ou par une température trop basse.

Le champ magnétique de réveil peut prendre toute valeur permettant de positionner les particules le long des lignes de champ du champ magnétique et/ou d'élever la température interne du module de fluide magnéto-rhéologique rétablissant les conditions normales d'utilisation en température du fluide magnéto-rhéologique. A titre d'exemple non limitatif, le champ magnétique de réveil est un champ magnétique plus faible que celui appliqué pour générer un retour haptique à l'élément mobile 6 en mouvement, ce qui permet de réactiver le module de fluide magnéto-rhéologique 3 sans générer de retour haptique perceptible par l'utilisateur.

Par exemple, on détecte l'activation d'un paramètre de réinitialisation par au moins un détecteur d'activation d'un paramètre de réinitialisation comportant un capteur du véhicule automobile distinct d'un capteur de fonctionnement du module de fluide magnéto-rhéologique 3. Le capteur de fonctionnement du module de fluide magnéto-rhéologique 3 est par exemple le capteur d'approche et/ou de contact de l'élément mobile 6 et/ou un capteur de position de l'élément mobile 6. Ces capteurs de fonctionnement du module de fluide magnéto-rhéologique 3 sont prévus pour le fonctionnement de l'interface de commande 1, plus précisément pour le contrôle de la génération du retour haptique à l'utilisateur.

En prévoyant au moins un détecteur d'activation d'un paramètre de réinitialisation distinct d'un capteur de fonctionnement du module de fluide magnéto-rhéologique 3, la détection de l'activation d'un paramètre de réinitialisation n'est plus limitée aux seules informations provenant de capteurs de fonctionnement du module de fluide magnéto-rhéologique 3 mais peut provenir d'autres capteurs du véhicule automobile, équipant déjà le véhicule automobile pour d'autres fonctions.

Selon un premier exemple de réalisation, le paramètre de réinitialisation surveillé est la mise sous tension d'un circuit d'alimentation électrique du véhicule automobile, c'est-à-dire une position distincte de la position « stop », dans laquelle la plupart des circuits électriques du véhicule sont coupés de l'alimentation provenant de la batterie, telles que les positions « marche », « accessoires » ou « démarrage » dans lesquelles l'alimentation électrique d'un certain nombre de circuits électriques du véhicule et notamment le démarrage du moteur est commandée. Le circuit d'alimentation électrique est par exemple le circuit principal d'alimentation pour lequel le paramètre de réinitialisation surveillé est la position de la clé de démarrage ou l'état de la carte de démarrage. On détecte ainsi le souhait de l'utilisateur d'accéder aux principales fonctions du véhicule automobile. Pour cela, l'unité de réveil 18 est reliée à un détecteur de mise sous tension du circuit d'alimentation électrique du véhicule automobile 23.

L'arrêt de l'application du champ magnétique de réveil peut être piloté à la fin de l'écoulement d'une durée prédéterminée, par exemple de l'ordre de quelques millisecondes.

Selon un autre exemple, on coupe l'application du champ magnétique de réveil au fluide magnéto-rhéologique 7 lorsqu'on détecte un déplacement de l'élément mobile 6 du module de fluide magnéto-rhéologique 3, indiquant que l'utilisateur manipule l'interface 1.

Pour cela, l'unité de réveil 18 peut être reliée à un capteur de position 21 de l'élément mobile 6.

Le capteur de position 21 peut être en outre relié à l'unité d'application d'un champ magnétique 4 pour commander l'alimentation en courant de la bobine 8 en fonction de la position de l'élément mobile 6 afin de générer le profil haptique souhaité en conditions normales d'utilisation, c'est-à-dire après la période d'application du champ magnétique de réveil.

Selon un autre exemple, on coupe l'application du champ magnétique de réveil au fluide magnéto-rhéologique 7 lorsqu'on détecte l'approche ou le contact de l'interface de commande 1 par l'utilisateur.

Pour cela, l'unité de réveil 18 peut être reliée à un capteur d'approche et/ou de contact 26 de l'interface de commande 1. Le capteur d'approche et/ou de contact 26 permet de détecter l'approche ou le toucher d'un utilisateur au niveau de l'élément de préhension 5 par l'unité de réveil 18 pour stopper l'application du champ magnétique de réveil au fluide magnéto-rhéologique 7.

Selon un autre exemple de réalisation, le paramètre de réinitialisation comporte la détection de l'approche ou du contact de l'interface de commande 1 par l'utilisateur. Le capteur d'approche et/ou de contact 26 permet de détecter l'approche ou le toucher d'un utilisateur au niveau de l'élément de préhension 5 par l'unité de réveil 18 pour appliquer un champ magnétique de réveil au fluide magnéto-rhéologique 7. On détecte ainsi l'intention de l'utilisateur d'interagir avec l'interface de commande 1.

Comme précédemment, l'arrêt de l'application du champ magnétique de réveil peut être piloté par l'unité de réveil 18 par exemple à la fin de l'écoulement d'une durée prédéterminée, ou lorsqu'un déplacement de l'élément mobile 6 est détecté ou lorsqu'on détecte un contact de l'interface 1 si le paramètre de réinitialisation est l'approche de l'interface 1 par l'utilisateur.

Le capteur d'approche et/ou de contact 26 peut être un capteur de contact configuré pour détecter un contact entre l'utilisateur et l'élément de préhension 5, ou un capteur sans contact configuré pour détecter la présence d'un utilisateur dans une zone prédéterminée autour de l'élément de préhension 5, par exemple lorsqu'il est dans un périmètre de quelques centimètres, soit une combinaison des deux, le capteur d'approche et/ou de contact 26 pouvant détecter à la fois la présence de l'utilisateur lorsqu'il est dans une zone prédéfinie autour de l'élément de préhension 5 et lorsqu'il touche l'élément de préhension 5.

Le capteur d'approche et/ou de contact 26 est par exemple un capteur capacitif placé au niveau de l'élément de préhension 5 comme représenté sur la figure 1. Suivant sa configuration, le capteur capacitif peut détecter l'utilisateur et plus particulièrement son doigt lorsque ce dernier touche l'élément de préhension 5 et/ou lorsqu'il est proche de l'élément de préhension 5, par exemple à quelques millimètres ou centimètres de l'élément de préhension 5. Le capteur capacitif peut donc être un capteur de contact et/ou un capteur sans contact selon sa configuration.

Le capteur d'approche et/ou de contact 26 peut également être un capteur de contact de type résistif placé au niveau de l'élément de préhension 5 qui permet de détecter le toucher de l'utilisateur au niveau de l'élément de préhension 5.

Le capteur d'approche et/ou de contact 26 peut aussi être un capteur optique, par exemple un capteur à infra-rouge situé au niveau de l'élément de préhension 5 et permettant de détecter l'approche et/ou le toucher de l'utilisateur ou un capteur optique tel qu'une caméra dont le champ comprend l'élément de préhension 5. La caméra (non représentée) est par exemple située au niveau du plafonnier d'un véhicule automobile et est orientée vers la console centrale comprenant l'interface de commande 1 avec le module de fluide magnéto-rhéologique 3. La caméra est couplée à une unité de traitement comprenant un logiciel d'analyse d'images qui permet de détecter l'approche de la main de l'utilisateur vers l'élément de préhension 5 et/ou son toucher. Lorsque l'approche de l'utilisateur est détectée, un signal est transmis à l'unité de réveil 18. Un autre signal peut être transmis lorsqu'on visualise que l'utilisateur touche l'élément de préhension 5. Le capteur optique peut donc être un capteur de contact et/ou un capteur sans contact.

Le capteur de position 21 et d'autres équipements liés au module de fluide magnéto-rhéologique 3 peuvent également être activés et désactivés en fonction de signaux fournis par le capteur d'approche et/ou de contact 26.

Selon un autre exemple de réalisation, le paramètre de réinitialisation comprend la détection d'une température inférieure à un seuil de température, tel que -20°C, par un capteur de température 24, pour appliquer un champ magnétique de réveil au fluide magnéto-rhéologique 7.

On constate en effet une augmentation de la viscosité du fluide magnéto-rhéologique à basse température. L'application d'un champ magnétique de réveil au fluide magnéto-rhéologique 7 permet d'élever la température interne du module de fluide magnéto-rhéologique 3 et ainsi de rétablir les conditions normales d'utilisation en température du fluide magnéto-rhéologique 7.

Le capteur de température 24 peut être configuré pour mesurer la température du fluide magnéto-rhéologique 7 ou pour mesurer la température d'un élément du module de fluide magnéto-rhéologique 3 ou encore pour mesurer la température intérieure du véhicule automobile dans l'habitacle.

Comme précédemment, l'arrêt de l'application du champ magnétique de réveil peut être piloté par l'unité de réveil 18 par exemple à la fin de l'écoulement d'une durée prédéterminée ou lorsqu'on détecte un déplacement de l'élément mobile 6 ou lorsqu'on détecte le contact ou l'approche de l'utilisateur.

Dans l'exemple de la figure 1, l'élément mobile 6 est rotatif.

Le capteur de position 21 de l'élément mobile 6 en rotation est par exemple un encodeur de position qui permet de connaître la position angulaire de l'élément mobile 6 autour de l'axe de rotation Z de manière à appliquer un retour haptique par le biais de l'unité d'application 8 en fonction de la position angulaire de l'élément mobile 6. L'encodeur de position peut comprendre par exemple un ensemble de contacts et un balai en contact successivement avec certains des contacts lors de la rotation de l'élément 6. Alternativement, l'encodeur de position peut être un encodeur optique comportant une ou plusieurs fourches optiques ou un dispositif piézo-électrique ou tout autre capteur de position connu de l'homme du métier. L'encodeur de position peut être situé à différents endroits à proximité de l'élément mobile 6 et notamment du côté de l'élément de préhension 5. Par ailleurs, de manière alternative, l'encodeur de position peut également être configuré pour déterminer la position angulaire absolue de l'élément de préhension 5 par rapport à une position de référence.

En outre, dans l'exemple de réalisation d'un élément mobile 6 en rotation, le module de fluide magnéto-rhéologique 3 comporte une embase 9 présentant une forme générale cylindrique s'étendant selon un axe de rotation Z du module 3, obturée à l'une de ses extrémités par un axe central fixe 10 orienté selon l'axe de rotation Z, définissant une cavité annulaire 11. L'élément mobile 6 est monté mobile sur l'embase 9 fixe, autour de l'axe de rotation Z.

La cavité 11 est destinée à recevoir d'une part le fluide magnéto-rhéologique 7 et d'autre part une extrémité de l'élément mobile 6. L'élément mobile 6 est alors partiellement immergé dans le fluide magnéto-rhéologique 7. L'embase 9 présente également un logement annulaire 12 qui entoure au moins partiellement la cavité 11. Le logement annulaire 12 reçoit une ou plusieurs bobine(s) 8 qui, avec son (leurs) alimentation(s) (non représentée(s)), sont reliées à l'unité d'application d'un champ magnétique 4.

La force de frottement appliquée par le fluide magnéto-rhéologique 7 sur l'élément mobile 6 varie en fonction de la surface de fluide en contact avec l'élément mobile 6. Ainsi, l'extrémité de l'élément mobile 6 en contact avec le fluide magnéto-rhéologique 7 peut comporter plusieurs parois d'extrémité 13 cylindriques et concentriques, s'étendant selon l'axe de rotation Z, et venant en regard de parois complémentaires s'étendant depuis le fond de la cavité 11. Par exemple, l'embase 9 comporte une paroi complémentaire 14, venant s'intercaler entre les parois d'extrémité 13 de l'élément mobile 6 pour augmenter les surfaces en regard entre l'élément mobile 6 et l'embase 9 et ainsi augmenter le couple de force que l'on peut exercer sur l'élément mobile 6 avec une alimentation donnée.

Différentes formes ou profils de retour haptique peuvent ainsi être obtenus en fonction de la configuration de l'unité d'application 4 d'un champ magnétique. Par exemple, l'intensité du champ magnétique peut avoir une forme en créneau dans laquelle l'intensité est nulle ou faible sauf au niveau des positions d'indexage où cette intensité est forte de manière à créer une force de frottement importante au passage des points d'indexage. D'autres motifs ou profils de force de résistance en fonction de la position sont également possibles, par exemple des profils triangulaires ou en dents de scie répartis autour des positions d'indexage, de sorte que celles-ci soit perçues comme un point dur progressif à surmonter, une fois pour l'atteindre, et une fois pour s'en éloigner ou seulement pour l'atteindre.

Le module de fluide magnéto-rhéologique 3 comporte en outre des joints 16, par exemple intercalés d'une part, entre la cavité 11 et un couvercle 15 fermant la cavité 11 et d'autre part, entre la cavité 11 et un épaulement de l'élément mobile 6. Les joints 16 assurent l'étanchéité pour éviter toute fuite du fluide magnéto-rhéologique 7 hors de la cavité 11. Le couvercle 15 comprend également un logement recevant un palier ou roulement à bille 17 qui assure la liaison en rotation entre l'embase 9 et l'élément mobile 6.

La figure 2 représente un deuxième exemple de réalisation.

Comme précédemment, l'interface de commande 11 comporte un module de fluide magnéto-rhéologique 31 et une unité de réveil 18. Le module de fluide magnéto-rhéologique 31 comporte un élément mobile 61, un fluide magnéto-rhéologique 7 en contact avec l'élément mobile 61, une unité d'application d'un champ magnétique 4 et au moins une bobine 81 pour appliquer un champ magnétique au fluide magnéto-rhéologique 7. L'unité d'application d'un champ magnétique 4 est configurée pour alimenter la bobine 81 en courant et modifier l'alimentation afin de générer un retour haptique à l'utilisateur déplaçant l'élément mobile 61.

Dans ce deuxième mode de réalisation, l'élément mobile 61 est mobile en translation. Le capteur de position est un capteur de déplacement linéaire 22.

## Revendications

1. Interface de commande à retour haptique pour véhicule automobile comportant un module de fluide magnéto-rhéologique (3 ; 31) comprenant un élément mobile (6 ; 61), un fluide magnéto-rhéologique (7) en contact avec l'élément mobile (6 ; 61), une unité d'application d'un champ magnétique (4) et au moins une bobine (8 ; 81) pour appliquer un champ magnétique au fluide magnéto-rhéologique (7), l'unité d'application d'un champ magnétique (4) étant configurée pour modifier l'alimentation de la bobine (8 ; 81) afin de générer un retour haptique à l'utilisateur déplaçant l'élément mobile (6 ; 61), **caractérisée en ce qu'**elle comporte une unité de réveil (18) configurée pour détecter l'activation d'un paramètre de réinitialisation, l'unité de réveil (18) étant reliée à l'unité d'application d'un champ magnétique (4) pour appliquer un champ magnétique de réveil au fluide magnéto-rhéologique (7) lorsque l'activation d'un paramètre de réinitialisation est détectée.

2. Interface de commande selon la revendication précédente, **caractérisée en ce que** l'unité de réveil (18) est reliée à au moins un détecteur d'activation du paramètre de réinitialisation (23, 24) du véhicule automobile distinct d'un capteur de fonctionnement du module de fluide magnéto-rhéologique (26, 21 ; 22).

3. Interface de commande selon l'une des revendications précédentes, **caractérisée en ce qu'**elle comporte un capteur d'approche et/ou de contact (26) et/ou un capteur de position (21 ; 22) de l'élément mobile (6 ; 61), relié à l'unité de réveil (18) et/ou **en ce que** l'unité de réveil (18) est reliée à un capteur de température (24) et/ou un détecteur de mise sous tension du circuit d'alimentation électrique du véhicule automobile (23).

4. Interface de commande selon l'une des revendications précédentes, **caractérisée en ce que** l'élément mobile (6) est rotatif.

5. Interface de commande selon l'une des revendications 1 à 3, **caractérisée en ce que** l'élément mobile (61) est mobile en translation.

6. Procédé de commande d'une interface de commande à retour haptique selon l'une des revendications précédentes, **caractérisé en ce qu'**on alimente la bobine pour appliquer un champ magnétique de réveil au fluide magnéto-rhéologique (7) lorsqu'on détecte qu'un paramètre de réinitialisation est activé.

7. Procédé de commande selon la revendication précédente, **caractérisé en ce qu'**on détecte l'activation d'un paramètre de réinitialisation par au moins un détecteur d'activation d'un paramètre de réinitialisation (23, 24) distinct d'un capteur de fonctionnement (26, 21 ; 22) du module de fluide magnéto-rhéologique(3 ; 31).

8. Procédé de commande selon l'une des revendications 6 ou 7, **caractérisé en ce que** le paramètre de réinitialisation comprend la mise sous tension d'un circuit d'alimentation électrique du véhicule automobile.

9. Procédé de commande selon l'une des revendications 6 à 8, **caractérisé en ce que** le paramètre de réinitialisation comprend la détection d'une température inférieure à un seuil de température.

10. Procédé de commande selon l'une des revendications 6 à 9, **caractérisé en ce que** le paramètre de réinitialisation comprend la détection de l'approche ou du contact de l'utilisateur de l'interface de commande (1 ; 11).

11. Procédé de commande selon la revendication précédente, **caractérisé en ce qu'**on alimente la bobine (8 ; 81) pour appliquer un champ magnétique de réveil au fluide magnéto-rhéologique (7) lorsqu'on détecte l'approche de l'utilisateur et on coupe l'application du champ magnétique de réveil au fluide magnéto-rhéologique (7) lorsqu'on détecte le contact de l'interface de commande (1 ; 11) par l'utilisateur.

12. Procédé de commande selon l'une des revendications 6 à 9, **caractérisé en ce qu'**on coupe l'application du champ magnétique de réveil au fluide magnéto-rhéologique (7) lorsqu'on détecte l'approche ou le contact de l'interface de commande (1 ; 11) par l'utilisateur.

13. Procédé de commande selon l'une des revendications 6 à 12, **caractérisé en ce qu'**on coupe l'application du champ magnétique de réveil au fluide magnéto-rhéologique (7) après une durée prédéterminée.

14. Procédé de commande selon l'une des revendications 6 à 13, **caractérisé en ce qu'**on coupe l'application du champ magnétique de réveil au fluide magnéto-rhéologique (7) lorsqu'on détecte un déplacement de l'élément mobile (6 ; 61).

## Patentansprüche

1. Steuerungsschnittstelle zur haptischen Rückmeldung für ein Kraftfahrzeug, aufweisend ein Modul für magnetorheologisches Fluid (3; 31) umfassend ein bewegliches Element (6; 61), ein magnetorheologisches Fluid (7) in Kontakt mit dem beweglichen Element (6; 61), eine Einheit zur Anwendung eines Magnetfelds (4) und mindestens eine Spule (8; 81) um ein Magnetfeld auf das magnetorheologische Fluid (7) anzuwenden, wobei die Einheit zur Anwendung eines Magnetfelds (4) dazu ausgebildet ist, die Versorgung der Spule (8; 81) zu verändern, um eine haptische Rückmeldung für den Benutzer zu erzeugen, die das bewegliche Element (6; 61) bewegt, **dadurch gekennzeichnet, dass** sie eine Weckeinheit (18) aufweist, die dazu ausgebildet ist, die Aktivierung eines Rücksetzparameters zu erkennen, wobei die Weckeinheit (18) mit der Einheit zur Anwendung eines Magnetfelds (4) verbunden ist, um ein Weckmagnetfeld auf das magnetorheologische Fluid (7) anzuwenden, wenn die Aktivierung eines Rücksetzparameters erkannt wird.

2. Steuerungsschnittstelle nach dem vorhergehenden Anspruch, **dadurch gekennzeichnet, dass** die Weckeinheit (18) mit mindestens einem Detektor der Aktivierung des Rücksetzparameters (23, 24) des Kraftfahrzeugs verbunden ist, der von einem Betriebssensor des Moduls für magnetorheologisches Fluid (26, 21; 22) getrennt ist.

3. Steuerungsschnittstelle nach einem der vorhergehenden Ansprüche, **dadurch gekennzeichnet, dass** sie einen Näherungs- und/oder Kontaktsensor (26) und/oder einen Positionssensor (21; 22) des beweglichen Elements (6; 61) aufweist, der mit der Weckeinheit (18) verbunden ist, und/oder dadurch, dass die Weckeinheit (18) mit einem Temperatursensor (24) und/oder einem Detektor des Unterspannungsetzens der Stromversorgungsschaltung des Kraftfahrzeugs (23) verbunden ist.

4. Steuerungsschnittstelle nach einem der vorhergehenden Ansprüche, **dadurch gekennzeichnet, dass** das bewegliche Element (6) drehbar ist.

5. Steuerungsschnittstelle nach einem der Ansprüche 1 bis 3, **dadurch gekennzeichnet, dass** das bewegliche Element (61) translatorisch beweglich ist.

6. Verfahren zur Steuerung einer Steuerungsschnittstelle zur haptischen Rückmeldung nach einem der vorhergehenden Ansprüche, **dadurch gekennzeichnet, dass** die Spule versorgt wird, um ein Weckmagnetfeld auf das magnetorheologische Fluid (7) anzuwenden, wenn erkannt wird, dass ein Rücksetzparameter aktiviert ist.

7. Verfahren zur Steuerung nach dem vorhergehenden Anspruch, **dadurch gekennzeichnet, dass** die Aktivierung eines Rücksetzparameters vom mindestens einem Detektor der Aktivierung eines Rücksetzparameters (23, 24) erkannt wird, der von einem Betriebssensor (26, 21; 22) des Moduls für magnetorheologisches Fluid (3; 31) getrennt ist.

8. Verfahren zur Steuerung nach einem der Ansprüche 6 oder 7, **dadurch gekennzeichnet, dass** der Rücksetzparameter das Unterspannungsetzen einer Stromversorgungsschaltung des Kraftfahrzeugs umfasst.

9. Verfahren zur Steuerung nach einem der Ansprüche 6 bis 8, **dadurch gekennzeichnet, dass** der Rücksetzparameter das Erkennen einer Temperatur unter einer Temperaturschwelle umfasst.

10. Verfahren zur Steuerung nach einem der Ansprüche 6 bis 9, **dadurch gekennzeichnet, dass** der Rücksetzparameter das Erkennen der Annäherung des Benutzers an die Steuerungsschnittstelle (1; 11) oder des Kontakts des Benutzers mit dieser umfasst.

11. Verfahren zur Steuerung nach dem vorhergehenden Anspruch, **dadurch gekennzeichnet, dass** die Spule (8; 81) versorgt wird, um ein Weckmagnetfeld auf das magnetorheologische Fluid (7) anzuwenden, wenn die Annäherung des Benutzers erkannt wird, und die Anwendung des Weckmagnetfelds auf das magnetorheologische Fluid (7) unterbrochen wird, wenn der Kontakt mit der Steuerungsschnittstelle (1; 11) durch den Benutzer erkannt wird.

12. Verfahren zur Steuerung nach einem der Ansprüche 6 bis 9, **dadurch gekennzeichnet, dass** die Anwendung des Weckmagnetfelds auf das magnetorheologische Fluid (7) unterbrochen wird, wenn die Annäherung an die oder der Kontakt mit der Steuerungsschnittstelle (1; 11) durch den Benutzer erkannt wird.

13. Verfahren zur Steuerung nach einem der Ansprüche 6 bis 12, **dadurch gekennzeichnet, dass** die Anwendung des Weckmagnetfelds auf das magnetorheologische Fluid (7) nach einer vorbestimmten Dauer unterbrochen wird.

14. Verfahren zur Steuerung nach einem der Ansprüche 6 bis 13, **dadurch gekennzeichnet, dass** die Anwendung des Weckmagnetfelds auf das magnetorheologische Fluid (7) unterbrochen wird, wenn eine Bewegung des beweglichen Elements (6; 61) erkannt wird.

## Claims

1. Haptic-feedback control interface for a motor vehicle, including a magnetorheological fluid module (3; 31) comprising a mobile element (6; 61), a magnetorheological fluid (7) in contact with the mobile element (6; 61), a unit for applying a magnetic field (4) and at least one coil (8; 81) for applying a magnetic field to the magnetorheological fluid (7), the unit for applying a magnetic field (4) being configured so as to modify the supply of power to the coil (8; 81) so as to generate haptic feedback for the user moving the mobile element (6; 61), **characterized in that** it includes a waking unit (18) configured so as to detect the activation of a reinitialization parameter, the waking unit (18) being linked to the unit for applying a magnetic field (4) in order to apply a waking magnetic field to the magnetorheological fluid (7) when the activation of a reinitialization parameter is detected.

2. Control interface according to the preceding claim, **characterized in that** the waking unit (18) is linked to at least one detector for detecting activation of the reinitialization parameter (23, 24) of the motor vehicle that is separate from an operating sensor of the magnetorheological fluid module (26, 21; 22).

3. Control interface according to either of the preceding claims, **characterized in that** it includes an approach and/or contact sensor (26) and/or a position sensor (21; 22) for the mobile element (6; 61), linked to the waking unit (18) and/or **in that** the waking unit (18) is linked to a temperature sensor (24) and/or a detector for detecting activation of the electric power supply circuit of the motor vehicle (23).

4. Control interface according to one of the preceding claims, **characterized in that** the mobile element (6) is rotary.

5. Control interface according to one of Claims 1 to 3, **characterized in that** the mobile element (61) is mobile in translation.

6. Method for controlling a haptic-feedback control interface according to one of the preceding claims, **characterized in that** the coil is supplied with power so as to apply a waking magnetic field to the magnetorheological fluid (7) when it is detected that a reinitialization parameter is activated.

7. Control method according to the preceding claim, **characterized in that** the activation of a reinitialization parameter is detected by at least one detector for detecting activation of a reinitialization parameter (23, 24) that is separate from an operating sensor (26, 21; 22) of the magnetorheological fluid module (3; 31).

8. Control method according to either of Claims 6 and 7, **characterized in that** the reinitialization parameter comprises activation of an electric power supply circuit of the motor vehicle.

9. Control method according to one of Claims 6 to 8, **characterized in that** the reinitialization parameter comprises detection of a temperature lower than a temperature threshold.

10. Control method according to one of Claims 6 to 9, **characterized in that** the reinitialization parameter comprises detection of approaching or contacting of the control interface (1; 11) by the user.

11. Control method according to the preceding claim, **characterized in that** the coil (8; 81) is supplied with power so as to apply a waking magnetic field to the magnetorheological fluid (7) when approaching of the user is detected, and the application of the waking magnetic field to the magnetorheological fluid (7) is stopped when contacting of the control interface (1; 11) by the user is detected.

12. Control method according to one of Claims 6 to 9, **characterized in that** the application of the waking magnetic field to the magnetorheological fluid (7) is stopped when approaching or contacting of the control interface (1; 11) by the user is detected.

13. Control method according to one of Claims 6 to 12, **characterized in that** the application of the waking magnetic field to the magnetorheological fluid (7) is stopped after a predetermined duration.

14. Control method according to one of Claims 6 to 13, **characterized in that** the application of the waking magnetic field to the magnetorheological fluid (7) is stopped when a movement of the mobile element (6; 61) is detected.
